# EUROPEAN PATENT APPLICATION

(11) **EP 2 978 170 A2**
(43) Date of publication of application: **27.01.2016**
(21) Application number: 15176684.7
(22) Date of filing: 14.07.2015
(51) Int. Cl.: H04L 12/58

(54) **METHOD, DEVICE, TERMINAL AND SERVER FOR PUSHING MESSAGE THROUGH WEB APPLICATION**

(30) Priority: 21.07.2014 CN 201410347730
(71) Applicant: Xiaomi Inc., Beijing 100085 (CN)
(72) Inventor: Li, Yuanyang, 100085 Beijing (CN); Cao, Shuangxi, 100085 Beijing (CN); Zuo, Jinglong, 100085 Beijing (CN)
(74) Representative: Sackin, Robert

(57) **Abstract**

The present disclosure relates to a method, a device, a terminal and a server for pushing a message through a web application, which belongs to the field of internet technology. The method comprises: acquiring an application list of web applications added to a terminal, at least one web application being included in the application list (101); sending the application list to a push server through a browser, so that the push server acquires a data packet to be pushed corresponding to the at least one web application according to the application list, the data packet to be pushed including at least a message to be pushed and push object information (102); receiving the data packet to be pushed corresponding to the at least one web application through the browser (103); and presenting the acquired message to be pushed according to the push object information (104). Since the web application implements the message pushing function, the functional service of the web application may be extended, which improves the user experience, and satisfies the functional needs of the web application publishers or the users to a certain extent.

## Description

### TECHNICAL FIELD

The present disclosure relates to the field of internet technology, and more particularly, to a method, a device, a terminal and a server for pushing a message through a web application.

### BACKGROUND

A web application (or web app) is an application that may be applied as soon as it is searched out and without being downloaded, has received wide attention due to its characteristics of less memory occupation, less traffic consumption, easy switching between applications, etc. A web application center or platform implanted in a browser brings together most of the web applications that may be used in daily work and life. An example of a web application center or platform is Light App provided by Baidu, Beijing, China. In the web application center, any kind of web applications may be added as desired, and each web application generally occupies hundreds of k bytes of memory. After a web application is added, an icon corresponding to the web application will be displayed on the desktop of a terminal. The web applications may implement about 90% of the functions of client version applications, and may substantially satisfy all the functional needs of the users in normal circumstances. However, since the web applications cannot provide functional services as versatile as the client version applications, and they still have some deficiencies in functions, it may be difficult for the web applications to satisfy the functional needs of the publishers or the users of the web applications in some special circumstances, which adversely affects user experience. Therefore, it is necessary to extend the functions of the web applications, for instance, to extend a message pushing function for the web applications, so that the web applications may be applied to more scenarios, to improve the user experience.

### SUMMARY

In order to overcome the problems in the related art, the present disclosure provides a method, a device, a terminal and a server for pushing a message through a web application. A web application or web app is a computer program that runs in a web browser or world wide web browser. It is created in a web browser supported programming language and relies on a web browser to render the application. Web applications may also run without a browser. For example, a web application may be a client program that interacts with a web server using standard web protocols, for example to provide extra data to the client program as a so-called "rich client" app.

According to a first aspect of the embodiments of the present disclosure, there is provided a method for pushing a message through a web application, the method comprises:
acquiring an application list of web applications added to a terminal, at least one web application being included in the application list;
sending the application list to a push server through a browser, so that the push server acquires a data packet to be pushed corresponding to the at least one web application according to the application list, the data packet to be pushed including at least a message to be pushed and push object information;
receiving the data packet to be pushed corresponding to the at least one web application through the browser; and
presenting the acquired message to be pushed according to the push object information.

Optionally, the presenting the acquired message to be pushed according to the push object information comprises:
determining a web application to be pushed corresponding to the message to be pushed according to the push object information;
sending the message to be pushed to the web application to be pushed;
displaying a push message prompt identification on an icon of the web application to be pushed; and
turning on the web application to be pushed to present the message to be pushed through the web application to be pushed when a click operation on the push message prompt identification is detected.

Optionally, the presenting the acquired message to be pushed according to the push object information comprises:
determining a web application to be pushed corresponding to the message to be pushed according to the push object information;
sending the message to be pushed to the web application to be pushed;
displaying push message prompt information in a system notification column; and
turning on the web application to be pushed to present the message to be pushed through the web application to be pushed when a click operation on the push message prompt information is detected.

According to a second aspect of the embodiments of the present disclosure, there is provided a method for pushing a message through a web application, the method comprises:
receiving an application list sent by a web application center through a browser, at least one web application being included in the application list;
acquiring a message to be pushed corresponding to the at least one web application from messages to be pushed collected in advance according to the application list;
generating a data packet to be pushed corresponding to the at least one web application, the data packet to be pushed including at least the message to be pushed and push object information; and
sending the data packet to be pushed to the web application center, so that the web application center presents the message according to the data packet to be pushed.

Optionally, before the acquiring the message to be pushed corresponding to the at least one web application from messages to be pushed collected in advance according to the application list, the method further comprises:
receiving messages to be pushed sent by a plurality of web application servers, and storing the received messages to be pushed; or
acquiring website updated contents over a preset time period from the plurality of web application servers, and generating messages to be pushed corresponding to a plurality of web applications according to the website updated contents.

According to a third aspect of the embodiments of the present disclosure, there is provided a device for pushing a message through a web application, the device comprises:
an application list acquiring module, configured to acquire an application list of web applications added to a terminal, at least one web application being included in the application list;
an application list sending module, configured to send the application list to a push server through a browser, so that the push server acquires a data packet to be pushed corresponding to the at least one web application according to the application list, the data packet to be pushed including at least a message to be pushed and push object information;
a data receiving module, configured to receive the data packet to be pushed corresponding to the at least one web application through the browser; and
a push message presenting module, configured to present the acquired message to be pushed according to the push object information.

Optionally, the push message presenting module is configured to determine a web application to be pushed corresponding to the message to be pushed according to the push object information; send the message to be pushed to the web application to be pushed; display a push message prompt identification on an icon of the web application to be pushed; and turn on the web application to be pushed to present the message to be pushed through the web application to be pushed when a click operation on the push message prompt identification is detected.

Optionally, the push message presenting module is configured to determine a web application to be pushed corresponding to the message to be pushed according to the push object information; send the message to be pushed to the web application to be pushed; display push message prompt information in a system notification column; and turn on the web application to be pushed to present the message to be pushed through the web application to be pushed when a click operation on the push message prompt information is detected.

According to a fourth aspect of the embodiments of the present disclosure, there is provided a device for pushing a message through a web application, the device comprises:
an application list receiving module, configured to receive an application list sent by a web application center through a browser, at least one web application being included in the application list;
a push message acquiring module, configured to acquire a message to be pushed corresponding to the at least one web application from messages to be pushed collected in advance according to the application list;
a data generation module, configured to generate a data packet to be pushed corresponding to the at least one web application, the data packet to be pushed including at least the message to be pushed and push object information; and
a data sending module, configured to send the data packet to be pushed to the web application center, so that the web application center presents the message according to the data packet to be pushed.

According to a fifth aspect of the embodiments of the present disclosure, there is provided a terminal, characterized in that, the terminal comprises:
a processor; and
a memory for storing instructions executable by the processor;
wherein the processor is configured to: acquire an application list of web applications added to a terminal, at least one web application being included in the application list; send the application list to a push server through a browser, so that the push server acquires a data packet to be pushed corresponding to the at least one web application according to the application list, the data packet to be pushed including at least a message to be pushed and push object information; receive the data packet to be pushed corresponding to the at least one web application through the browser; and present the acquired message to be pushed according to the push object information.

According to a sixth aspect of the embodiments of the present disclosure, there is provided a server, characterized in that, the server comprises:
a processor; and
a memory for storing instructions executable by the processor;
wherein the processor is configured to: receive an application list sent by a web application center through a browser, at least one web application being included in the application list; acquire a message to be pushed corresponding to the at least one web application from messages to be pushed collected in advance according to the application list; generate a data packet to be pushed corresponding to the at least one web application, the data packet to be pushed including at least the message to be pushed and push object information; and send the data packet to be pushed to the web application center, so that the web application center presents the message according to the data packet to be pushed.

According to a seventh aspect of the embodiments of the present disclosure, there is provided a computer program, which when executing on a processor, performs the method of the first aspect of the embodiments of the present disclosure.

According to an eighth aspect of the embodiments of the present disclosure, there is provided a computer program, which when executing on a processor, performs the method of the second aspect of the embodiments of the present disclosure.

According to a ninth aspect of the embodiments of the present disclosure, there is provided a computer program product stored on a computer usable medium, comprising computer-readable program means for causing a terminal to implement the method of the first aspect of the embodiments of the present disclosure.

According to a tenth aspect of the embodiments of the present disclosure, there is provided a computer program product stored on a computer usable medium, comprising computer-readable program means for causing a sever to implement the method of the second aspect of the embodiments of the present disclosure.

The technical solutions provided by the embodiments of the present disclosure may include the following advantageous effects:
the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for pushing a message through a web application according to an exemplary embodiment.
Fig. 2 is a flow chart presenting a method for pushing a message through a web application according to an exemplary embodiment.
Fig. 3 is a flow chart showing a method for pushing a message through a web application according to an exemplary embodiment.
Fig. 4 is a schematic diagram presenting a terminal interface according to an exemplary embodiment.
Fig. 5 is a block diagram showing a device for pushing a message through a web application according to an exemplary embodiment.
Fig. 6 is a block diagram presenting a device for pushing a message through a web application according to an exemplary embodiment.
Fig. 7 is a block diagram showing a terminal according to an exemplary embodiment.
Fig. 8 is a block diagram showing a server according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

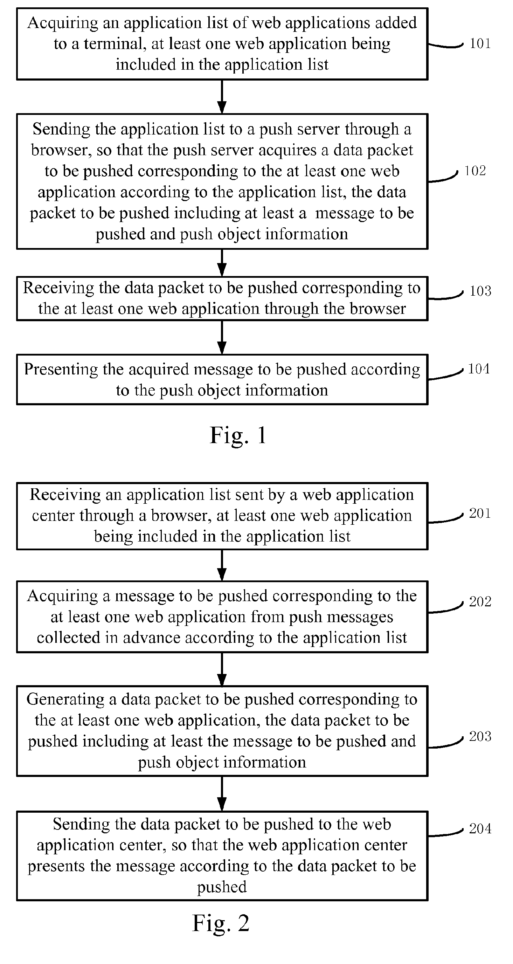

Fig. 1 is a flow chart showing a method for pushing a message through a web application according to an exemplary embodiment. As shown in Fig. 1, the method for pushing a message through a web application is performed in a terminal, and includes the following steps.

In step 101, an application list of web applications added to a terminal is acquired, at least one web application being included in the application list.

In step 102, the application list is sent to a push server through a browser, so that the push server acquires a data packet to be pushed corresponding to the at least one web application according to the application list, the data packet to be pushed including at least a message to be pushed and push object information.

In step 103, the data packet to be pushed corresponding to the at least one web application is received through the browser.

In step 104, the acquired message to be pushed is presented according to the push object information.

According to the method provided by the embodiments of the present disclosure, the web application center such as Light App of Baidu, Beijing, China sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

Optionally, the presenting the acquired message to be pushed according to the push object information, includes:
determining a web application to be pushed corresponding to the message to be pushed according to the push object information;
sending the message to be pushed to the web application to be pushed;
displaying a push message prompt identification on an icon of the web application to be pushed; and
turning on the web application to be pushed to present the message to be pushed through the web application to be pushed when a click operation on the push message prompt identification is detected.

Optionally, the presenting the acquired message to be pushed according to the push object information includes:
determining a web application to be pushed corresponding to the message to be pushed according to the push object information;
sending the message to be pushed to the web application to be pushed;
displaying push message prompt information in a system notification column; and
turning on the web application to be pushed to present the message to be pushed through the web application to be pushed when a click operation on the push message prompt information is detected.

All of the above alternative technical solutions may be combined in any form to form alternative embodiments of the present disclosure, which are not described repeatedly.

Fig. 2 is a flow chart showing a method for pushing a message through a web application according to an exemplary embodiment. As shown in Fig. 2, the method for pushing message for the web application is performed in a push server, and includes the following steps.

In step 201, an application list sent by a web application center through a browser is received, at least one web application being included in the application list.

In step 202, a message to be pushed corresponding to the at least one web application from messages to be pushed collected in advance according to the application list is acquired.

In step 203, a data packet to be pushed corresponding to the at least one web application is generated, the data packet to be pushed including at least the message to be pushed and push object information.

In step 204, the data packet to be pushed is sent to the web application center, so that the web application center presents the message according to the data packet to be pushed.

According to the method provided by the embodiments of the present disclosure, the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

Optionally, before the acquiring the message to be pushed corresponding to the at least one web application from messages to be pushed collected in advance according to the application list, the method further includes:
receiving messages to be pushed sent by a plurality of web application servers, and storing the received messages to be pushed; or
acquiring website updated contents over a preset time period from the plurality of web application servers, and generating messages to be pushed corresponding to the plurality of web applications according to the website updated contents.

All of the above alternative technical solutions may be combined in any form to form alternative embodiments of the present disclosure, which are not described repeatedly.

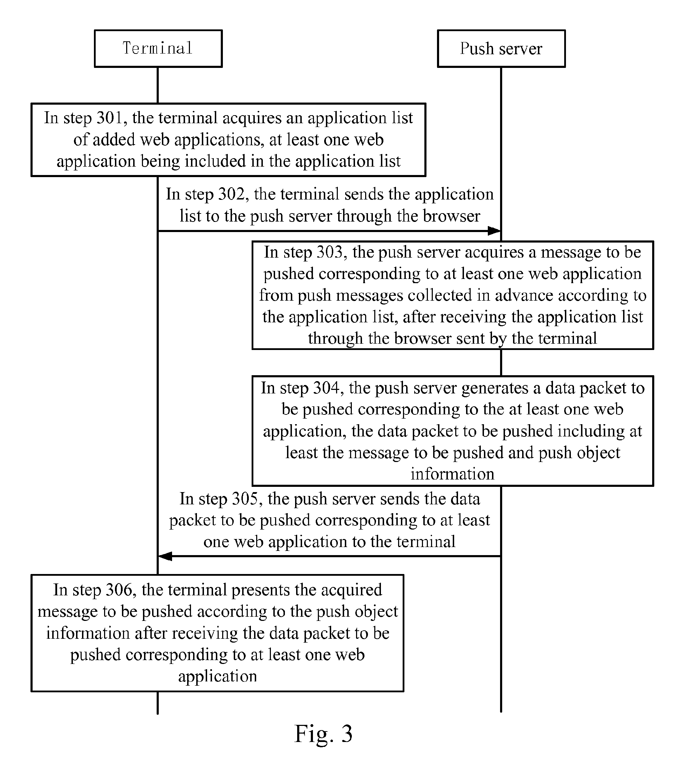

Fig. 3 is a flow chart showing a method for pushing a message through a web application according to an exemplary embodiment, in which the interaction subjects are a terminal and a push server. Wherein at least one web application and a browser embedded with a web application center or platform, such as Light App of Baidu, Beijing, China are installed in the terminal. The web application center brings together thousands of web applications, the users may add various web applications to the web application center as desired, and an icon of the web application will be displayed on the desktop after the web application is added. As shown in Fig. 3, the method mainly includes the following steps.

In step 301, a terminal acquires an application list of added web applications, at least one web application being included in the application list.

In the embodiments of the present disclosure, the terminal acquires the application list of added web applications through the web application center. The web application center may provide support for various web applications provided by each application server. Meanwhile, the web application center also determines how the browser displays contents of a web page and format information of the page, namely, the web application center further includes a browser core. And the web application presents the contents of the web page through the browser core in a way similar to the client version applications.

For example, in a news application of a client version application, a news application server usually captures news contents from We Media platform such as a news website or a micro blog, and presents the captured news contents on the news application of the client version. It is different in that the news application of the client version needs to be installed with a large installation package of megabytes or even tens of megabytes. However, a web application does not need to be installed with such a large package, and it generally needs to be installed with only a shell, and the installation package of the web application is usually of a size of only a few hundred k bytes. Literally, the substance of a web application is browsing a web page, and the way it is presented is like to use a client version application.

Furthermore, after a web application is added by a user, the web application center will record it, and form a web application list of web applications added to the terminal, namely, the web application added to the terminal will be managed by the web application center. So the terminal may directly pull the web application list from the web application center. At least one web application is included in the application list.

In step 302, the terminal sends the application list to the push server through the browser.

Wherein when the terminal sends the application list to the push server through the browser, the application list may be packed and then sent through the browser, or the application list may be sent through the browser directly, the specific way of sending is not particularly limited by the embodiments of the present disclosure.

In step 303, the push server acquires a message to be pushed corresponding to at least one web application from messages to be pushed collected in advance according to the application list, after the application list through the browser sent by the terminal is received.

In the embodiments of the present disclosure, the messages to be pushed collected in advance by the push server may be obtained in the following two ways.

In a first way, messages to be pushed sent by a plurality of web application servers are received, and the received messages to be pushed are stored.

In the first way, a plurality of web application servers initiatively sends messages to be pushed to the push server. For one web application server, for example, in a news web application, when the web application server captures fresh news message from a We Media platform such as a news website or a micro blog, etc., the web application server initiatively send the news message as the message to be pushed to the push server. And the push server may temporarily store the news message after the news message is received. Wherein the storage medium may be a flash memory, a hard disk, etc., and the type of the storage medium is not particularly limited in the embodiments of the present disclosure.

It should be noted that, for temporarily storing the push message, the push server allots a piece of storage space respectively for each web application in the web application center. Thus, the messages to be pushed corresponding to each web application will be stored in the same piece of storage space, a push message of a web application A may not be mistaken for a push message of a web application B during a message pushing process.

In a second way, website updated contents over a preset time period are acquired from a plurality of web application servers, and messages to be pushed corresponding to a plurality of web applications are generated according to the website updated contents.

In the second way, the push server initiatively acquires messages to be pushed from the plurality of web application servers. The push server may acquire latest updated contents from the plurality of web application servers at a preset time period according to a capture algorithm, and directly store the acquired latest contents as messages to be pushed, or conduct a process such as combination or deletion to the acquired latest contents to generate message to be pushed and store them. Wherein, the preset time period may specifically be 5 minutes or 10 minutes, etc. which is not particularly limited in the present disclosure.

No matter in which way messages to be pushed of the plurality of web applications are collected, the messages to be pushed may be stored by the push server in the way of storing as shown in Table 1.

**Table 1**

| web application | message to be pushed |
|---|---|
| | message to be pushed 1 |
| web application 1 | ······ |
| | message to be pushed N |
| ······ | ······ |
| | message to be pushed 1 |
| web application N | ······ |
| | message to be pushed N |

In the embodiments of the present disclosure, after the messages to be pushed of the plurality of web applications are collected in advance, when the application list sent by the terminal through the browser is received, the push server acquires a message to be pushed corresponding to each web application in the application list, from the messages to be pushed of the plurality of web applications collected in advance, according to the storage relationship in the application list and as shown in Table 1.

However, in addition to the above way of acquiring the message to be pushed of each web application in the application list, other ways of acquiring are also possible, which are not particularly limited in the embodiments of the present disclosure.

In step 304, the push server generates a data packet to be pushed corresponding to the at least one web application, the data packet to be pushed including at least the message to be pushed and push object information.

In the embodiments of the present disclosure, the push server will also generate the data packet to be pushed corresponding to each web application after the message to be pushed corresponding to each web application is acquired; in addition to the message to be pushed, the data packet to be pushed also includes the push object information. Wherein the push object information may clearly indicate which web application the message to be pushed will be pushed to. The push object information may be an application identification of the web application, for instance, an application name or an application icon of the web application, etc. and the representation of the push object information is not particularly limited in the embodiments of the present disclosure.

However, in addition to the message to be pushed and the push object information, the data packet to be pushed also includes other contents, for instance, generation time of the message to be pushed, number of the message to be pushed, etc., and the contents included in the data packet to be pushed are not particularly limited in the embodiments of the present disclosure.

In step 305, the push server sends the data packet to be pushed corresponding to at least one web application to the terminal.

In the embodiments of the present disclosure, in sending the data packet to be pushed corresponding to at least one web application in the application list, specifically, the push server sends the data packet to be pushed corresponding to at least one web application to the browser installed on the terminal. Further, since the data packet to be pushed may include pictures or a plurality of push items, the data packet to be pushed may be larger. In order to facilitate the transmission of the data packet to be pushed, the data packet to be pushed may be packed, and then sent to the browser of the terminal. However, the data packet to be pushed directly, and the way of sending is not particularly limited in the embodiments of the present disclosure.

In step 306, the terminal presents the acquired message to be pushed according to the push object information after the data packet to be pushed corresponding to at least one web application is received.

In the embodiments of the present disclosure, the terminal does not care about specific contents of the data packet to be pushed, but directly forwards the data packet to be pushed to the web application center, after the data packet to be pushed corresponding to at least one web application is received through the browser. The web application center may present the message to be pushed in the following two ways after the data packet to be pushed is received and parsed, thereby achieving the purpose of pushing the message to the user through a web application.

In a first way, for each data packet to be pushed, a web application to be pushed corresponding to the message to be pushed is determined according to the push object information; the message to be pushed is sent to the web application to be pushed; a push message prompt identification is displayed on an icon of the web application to be pushed; and the web application to be pushed is turned on to present the message to be pushed through the web application to be pushed when a click operation on the push message prompt identification is detected.

In the first way, the web application center of the terminal processes each data packet to be pushed according to the above described way after the plurality of data packets to be pushed is received. Since the data packets to be pushed includes the push object information, and the push object information may uniquely identify one web application, the web application to be pushed corresponding to the message to be pushed in the data packets to be pushed may be determined in the application list of the web applications added to the terminal according to the push object information in the data packets to be pushed.

After the web application to be pushed is determined, the web application center sends the message to be pushed to the web application to be pushed. Meanwhile, the push message prompt identification is displayed on an icon of the web application to be pushed to prompt the user. Wherein the push message prompt identification may be displayed on the upper right or the lower right or other portions of the icon, which is not particularly limited in the embodiments of the present disclosure. The push message prompt identification may specifically be a string of characters, such as a word "NEW" or a Chinese word "Xin", which is also not particularly limited in the embodiments of the present disclosure.

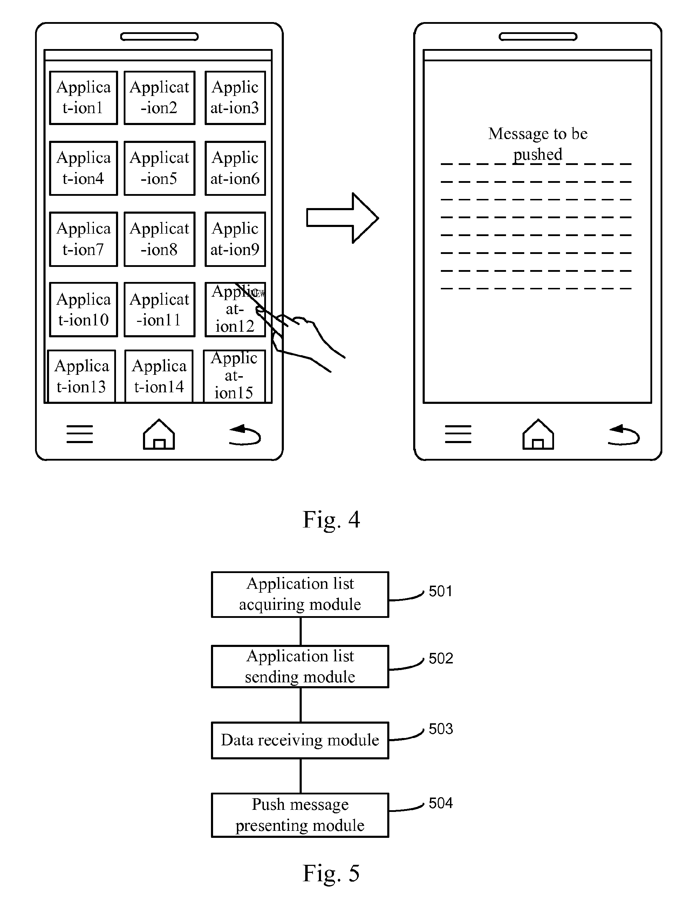

Furthermore, referring to Fig. 4, when a click operation on the push message prompt identification is detected, namely, when a click operation on the icon of the web application to be pushed is detected, the web application to be pushed is turned on, and the process directly jumps to a relevant page of the web application. The message to be pushed is presented wholly in the relevant page. Wherein since each web application is displayed on the desktop in a fixed position, it may be determined that the icon of the web application is clicked when a click operation at the position of one web application is detected.

In a second way, for each data packet to be pushed, a web application to be pushed corresponding to the message to be pushed is determined according to the push object information; the message to be pushed is sent to the web application to be pushed; push message prompt information is displayed in a system notification column; and the web application to be pushed is turned on to present the message to be pushed through the web application to be pushed when a click operation on the push message prompt information is detected.

In the second way, the web application center of the terminal processes each data packet to be pushed according to the above described way after the plurality of data packets to be pushed are received. Since the data packets to be pushed includes the push object information, and the push object information may uniquely identify one web application, the web application to be pushed corresponding to the message to be pushed in the data packets to be pushed may be determined in the application list of the web applications added to the terminal according to the push object information in the data packets to be pushed.

The web application center sends the message to be pushed to the web application to be pushed after the web application to be pushed is determined. Meanwhile, the push message prompt information is displayed on the system notification column of the terminal to prompt the user. Wherein the push message prompt information may be a part of the message to be pushed, such as the beginning part of the message to be pushed; or may be a text "**web application has received the push message", and the form of the push message prompt information is not particularly limited in the embodiments of the present disclosure.

When a click operation on the push message prompt information is detected, the web application to be pushed is turned on, and the process directly jumps to a relevant page of the web application. The message to be pushed is presented wholly in the relevant page.

According to the method provided by the embodiments of the present disclosure, the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

Fig. 5 is a block diagram showing a device for pushing a message through a web application according to an exemplary embodiment. Referring to Fig. 5, the device includes an application list acquiring module 501, an application list sending module 502, a data receiving module 503, and a push message presenting module 504.

Wherein the application list acquiring module 501 is configured to acquire an application list of web applications added to a terminal, at least one web application being included in the application list; the application list sending module 502 is configured to send the application list to a push server through a browser, so that the push server acquires a data packet to be pushed corresponding to the at least one web application according to the application list, the data packet to be pushed including at least a message to be pushed and push object information; the data receiving module 503 is configured to receive the data packet to be pushed corresponding to the at least one web application through the browser; and the push message presenting module 504 is configured to present the acquired message to be pushed according to the push object information.

Optionally, the push message presenting module is configured to determine a web application to be pushed corresponding to the message to be pushed according to the push object information; send the message to be pushed to the web application to be pushed; display a push message prompt identification on an icon of the web application to be pushed; and turn on the web application to be pushed to present the message to be pushed through the web application to be pushed when a click operation on the push message prompt identification is detected.

Optionally, the push message presenting module is configured to determine a web application to be pushed corresponding to the message to be pushed according to the push object information; send the message to be pushed to the web application to be pushed; display push message prompt information in a system notification column; and turn on the web application to be pushed to present the message to be pushed through the web application to be pushed when a click operation on the push message prompt information is detected.

According to the device provided by the embodiments of the present disclosure, the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

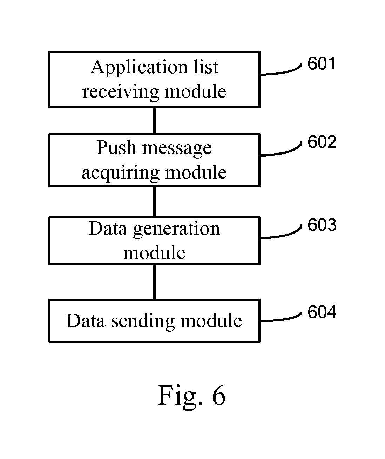

Fig. 6 is a block diagram showing a device for pushing a message through a web application according to an exemplary embodiment. Referring to Fig. 6, the device includes an application list receiving module 601, a push message acquiring module 602, a data generation module 603, and a data sending module 604.

Wherein the application list receiving module 601 is configured to receive an application list sent by a web application center through a browser, at least one web application being included in the application list; the push message acquiring module 602 is configured to acquire a message to be pushed corresponding to the at least one web application from messages to be pushed collected in advance according to the application list; the data generation module 603 is configured to generate a data packet to be pushed corresponding to the at least one web application, the data packet to be pushed including at least the message to be pushed and push object information; and the data sending module 604 is configured to send the data packet to be pushed to the web application center, so that the web application center presents the message according to the data packet to be pushed.

Optionally, the device further includes:
a push message collection module configured to receive the message to be pushed sent by a plurality of web application servers, and store the received message to be pushed; or acquire website updated contents over a preset time period from the plurality of web application servers, and generate the message to be pushed corresponding to the plurality of web applications according to the website updated contents.

According to the device provided by the embodiments of the present disclosure, the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

With respect to the device in the above embodiments, specific operations performed by each modules have been described in detail in the embodiments of related method, and detailed description will not be repeated here.

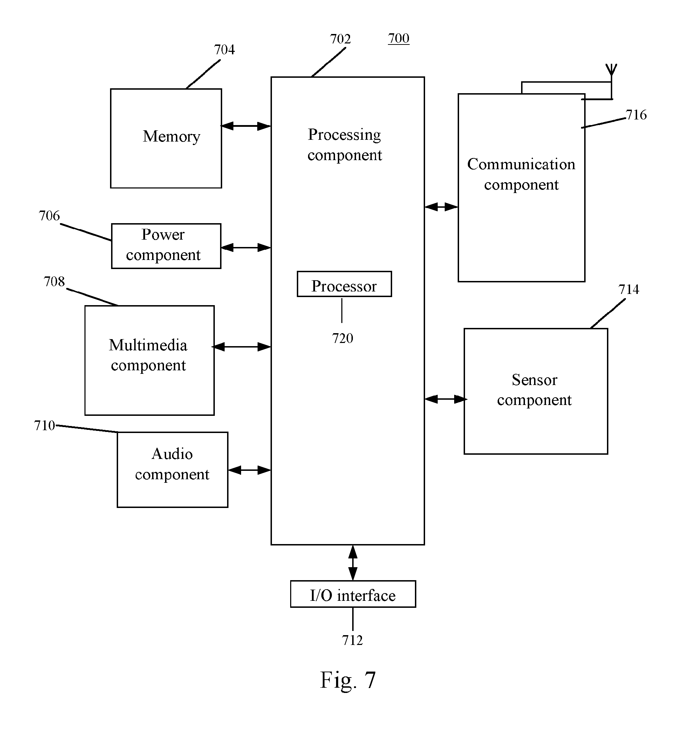

Fig. 7 is a block diagram showing a terminal 700 for message push of the web application according to an exemplary embodiment. For instance, the terminal 700 may be a mobile phone, a computer, a digital broadcast terminal, a messaging device, a gaming console, a tablet, a medical device, exercise equipment, a personal digital assistant and the like.

Referring to Fig. 7, the terminal 700 may include one or more of the following components: a processing component 702, a memory 704, a power component 706, a multimedia component 708, an audio component 710, an I/O (Input/Output) interface 712, a sensor component 714, and a communication component 716.

The processing component 702 usually controls overall operations of the terminal 700, such as the operations associated with display, telephone calls, data communications, camera operations, and recording operations. The processing component 702 may include one or more processors 720 to execute instructions to perform all or part of the steps in the above described methods. Furthermore, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the terminal 700. Examples of such data include instructions for any application or method operated on the terminal 700, contact data, phonebook data, messages, pictures, videos, etc. The memory 704 may be implemented using any type of volatile or non-volatile memory device or combination thereof, such as a SRAM (Static Random Access Memory), an EEPROM (Electrically Erasable Programmable Read-Only Memory), an EPROM (Erasable Programmable Read-Only Memory), a PROM (Programmable Read-Only Memory), a ROM (Read-Only Memory), a magnetic memory, a flash memory, a magnetic or optical disk.

The power component 706 provides power to various components of the terminal 700. The power component 706 may include a power management system, one or more power sources, and other components associated with the generation, management, and distribution of power in the terminal 700.

The multimedia component 708 includes a screen providing an output interface between the terminal 700 and the user. In some embodiments, the screen may include a LCD (Liquid Crystal Display) and a TP (Touch Panel). If the screen includes the TP, the screen may be implemented as a touch screen to receive input signals from the user. The TP includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 708 includes a front camera and/or a rear camera. The front camera and/or the rear camera may receive an external multimedia datum while the terminal 700 is in an operation mode, such as a photographing mode or a video mode. Each of the front camera and the rear camera may be a fixed optical lens system or have focus and optical zoom capability.

The audio component 710 is configured to output and/or input audio signals. For instance, the audio component 710 includes a MIC (Microphone) configured to receive an external audio signal when the terminal 700 is in an operation mode, such as a call mode, a recording mode, and a voice identification mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, a button, and the like. The button may include, but not limited to, a home button, a volume button, a starting button, and a locking button.

The sensor component 714 includes one or more sensors to provide status assessments of various aspects of the terminal 700. For instance, the sensor component 714 may detect an open/closed status of the terminal 700, relative positioning of components, e.g., the display and the keyboard of the terminal 700, a change in position of the terminal 700 or a component of the terminal 700, a presence or absence of user contact with the terminal 700, an orientation or an acceleration/deceleration of the terminal 700, and a change in temperature of the terminal 700. The sensor component 714 may include a proximity sensor configured to detect the presence of nearby objects without any physical contact. The sensor component 714 may also include a light sensor, such as a CMOS (Complementary Metal Oxide Semiconductor) or CCD (Charge-coupled Device) image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the terminal 700 and other devices. The terminal 700 can access a wireless network based on a communication standard, such as WiFi, 2G or 3G, or a combination thereof. In one exemplary embodiment, the communication component 716 receives a broadcast signal or broadcast associated information from an external broadcast management system via a broadcast channel. In one exemplary embodiment, the communication component 716 further includes a NFC (Near Field Communication) module to facilitate short-range communications. For instance, the NFC module may be implemented based on a RFID (Radio Frequency Identification) technology, an IrDA (Infra-red Data Association) technology, an UWB (Ultra Wideband) technology, a BT (Bluetooth) technology, and other technologies.

In exemplary embodiments, the terminal 700 may be implemented with one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), controllers, micro-controllers, microprocessors, or other electronic components, for performing the above described method.

In exemplary embodiments, there is also provided a non-transitory computer readable storage medium including instructions, such as included in the memory 704, executable by the processor 720 in the terminal 700, for performing the above described method. For instance, the non-transitory computer-readable storage medium may be a ROM, a RAM (Random Access Memory), a CD-ROM (Compact Disc Read-Only Memory), a magnetic tape, a floppy disc, an optical data storage device, and the like.

A non-transitory computer readable storage medium, when instructions in the storage medium are executed by a processor of a terminal, the terminal can execute a method for pushing a message through a web application, the method includes:
acquiring an application list of web applications added to a terminal, at least one web application being included in the application list;
sending the application list to a push server through a browser, so that the push server acquires a data packet to be pushed corresponding to the at least one web application according to the application list, the data packet to be pushed including at least a message to be pushed and push object information;
receiving the data packet to be pushed corresponding to the at least one web application through the browser; and
presenting the acquired message to be pushed according to the push object information.

Optionally, the presenting the acquired message to be pushed according to the push object information includes:
determining a web application to be pushed corresponding to the message to be pushed according to the push object information;
sending the message to be pushed to the web application to be pushed;
displaying a push message prompt identification on an icon of the web application to be pushed; and
turning on the web application to be pushed to present the message to be pushed through the web application to be pushed when a click operation on the push message prompt identification is detected.

Optionally, the presenting the acquired message to be pushed according to the push object information includes:
determining a web application to be pushed corresponding to the message to be pushed according to the push object information;
sending the message to be pushed to the web application to be pushed;
displaying push message prompt information in a system notification column; and
turning on the web application to be pushed to present the message to be pushed through the web application to be pushed when a click operation on the push message prompt information is detected.

According to the non-transitory computer readable storage medium provided by the embodiments of the present disclosure, the web application center sends the application list to the push server through the browser after acquiring the application list of a web application added to the terminal. The web application center receives the data packet to be pushed corresponding to at least one web application through the browser and presents the acquired message to be pushed according to the push object information, after the push server acquires the data packet to be pushed corresponding to at least one web application according to the application list. Since the web application implements the message pushing function, the functional service of the web application may be extended, which improves the user experience, and satisfies the functional needs of the web application publishers or the users to a certain extent.

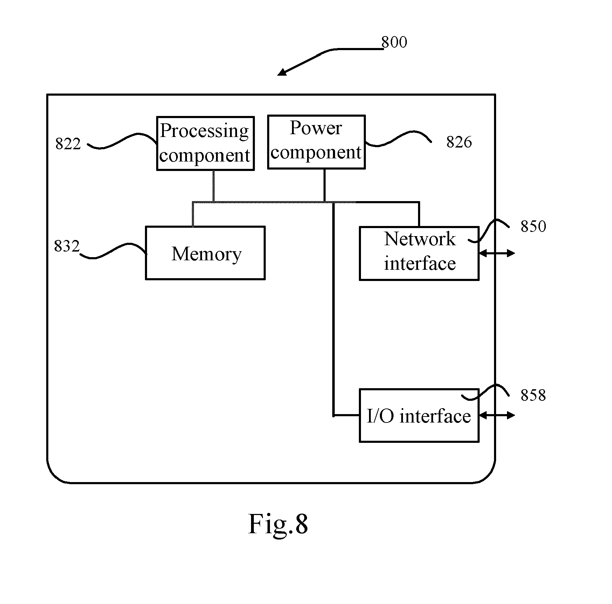

Fig. 8 is a block diagram showing a server 800 for message push of the web application according to an exemplary embodiment. Referring to Fig. 8, the server 800 includes a processing component 822 that further includes one or more processors, and memory resources represented by a memory 832 for storing instructions, such as application programs, executable by the processing component 822. The application programs stored in the memory 832 may include one or more modules, each of them corresponding to a set of instructions. Moreover, the processing component 822 is configured to execute the instructions to perform the method for pushing message for the web application executed by the server in the embodiment of the above described method.

The server 800 may also include a power component 826 configured to perform power management of the server 800, wired or wireless network interface(s) 850 configured to connect the server 800 to a network, and an input/output (I/O) interface 858. The server 800 may operate based on an operating system stored in the memory 832, such as Windows ServerTM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for pushing a message through a web application, **characterized in that**, the method comprises:
acquiring an application list of web applications added to a terminal, at least one web application being included in the application list;
sending the application list to a push server through a browser, so that the push server acquires a data packet to be pushed corresponding to the at least one web application according to the application list, the data packet to be pushed including at least a message to be pushed and push object information;
receiving the data packet to be pushed corresponding to the at least one web application through the browser; and
presenting the acquired message to be pushed according to the push object information.

2. The method according to claim 1, wherein, the presenting the acquired message to be pushed according to the push object information, comprises:
determining a web application to be pushed corresponding to the message to be pushed according to the push object information;
sending the message to be pushed to the web application to be pushed;
displaying a push message prompt identification on an icon of the web application to be pushed; and
turning on the web application to be pushed to present the message to be pushed through the web application to be pushed, when a click operation on the push message prompt identification is detected.

3. The method according to claim 1, wherein, the presenting the acquired message to be pushed according to the push object information, comprises:
determining a web application to be pushed corresponding to the message to be pushed according to the push object information;
sending the message to be pushed to the web application to be pushed;
displaying push message prompt information in a system notification column; and
turning on the web application to be pushed to present the message to be pushed through the web application to be pushed, when a click operation on the push message prompt information is detected.

4. A method for pushing a message through a web application, **characterized in that**, the method comprises:
receiving an application list sent by a web application center through a browser, at least one web application being included in the application list;
acquiring a message to be pushed corresponding to the at least one web application from messages to be pushed collected in advance, according to the application list;
generating a data packet to be pushed corresponding to the at least one web application, the data packet to be pushed including at least the message to be pushed and push object information; and
sending the data packet to be pushed to the web application center, so that the web application center presents the message according to the data packet to be pushed.

5. The method according to claim 4, wherein, before the acquiring the message to be pushed corresponding to the at least one web application from the messages to be pushed collected in advance according to the application list, the method further comprises:
receiving messages to be pushed sent by a plurality of web application servers, and storing the received messages to be pushed; or
acquiring website updated contents over a preset time period from the plurality of web application servers, and generating messages to be pushed corresponding to a plurality of web applications according to the website updated contents.

6. A device for pushing a message through a web application, **characterized in that**, the device comprises:
an application list acquiring module, configured to acquire an application list of web applications added to a terminal, at least one web application being included in the application list;
an application list sending module, configured to send the application list to a push server through a browser, so that the push server acquires a data packet to be pushed corresponding to the at least one web application according to the application list, the data packet to be pushed including at least a message to be pushed and push object information;
a data receiving module, configured to receive the data packet to be pushed corresponding to the at least one web application through the browser; and
a push message presenting module, configured to present the acquired message to be pushed according to the push object information.

7. The device according to claim 6, wherein, the push message presenting module is configured to, determine a web application to be pushed corresponding to the message to be pushed according to the push object information; send the message to be pushed to the web application to be pushed; display a push message prompt identification on an icon of the web application to be pushed; and turn on the web application to be pushed to present the message to be pushed through the web application to be pushed, when a click operation on the push message prompt identification is detected.

8. The device according to claim 6, wherein, the push message presenting module is configured to determine a web application to be pushed corresponding to the message to be pushed according to the push object information; send the message to be pushed to the web application to be pushed; display push message prompt information in a system notification column; and turn on the web application to be pushed to present the message to be pushed through the web application to be pushed, when a click operation on the push message prompt information is detected.

9. A device for pushing a message through a web application, **characterized in that**, the device comprises:
an application list receiving module, configured to receive an application list sent by a web application center through a browser, at least one web application being included in the application list;
a push message acquiring module, configured to acquire a message to be pushed corresponding to the at least one web application at which messages to be pushed are collected in advance, according to the application list;
a data generation module, configured to generate a data packet to be pushed corresponding to the at least one web application, the data packet to be pushed including at least the message to be pushed and push object information; and
a data sending module, configured to send the data packet to be pushed to the web application center, so that the web application center presents the message according to the data packet to be pushed.

10. The device according to claim 9, wherein, the device further comprises:
a push message collection module, configured to receive messages to be pushed sent by a plurality of web application servers, and store the received messages to be pushed; or acquire website updated contents over a preset time period from the plurality of web application servers, and generate messages to be pushed corresponding to a plurality of web applications according to the website updated contents.

11. A terminal, **characterized in that**, the terminal comprises:
a processor; and
a memory for storing instructions executable by the processor;
wherein the processor is configured to: acquire an application list of web applications added to a terminal, at least one web application being included in the application list; send the application list to a push server through a browser, so that the push server acquires a data packet to be pushed corresponding to the at least one web application according to the application list, the data packet to be pushed including at least a message to be pushed and push object information; receive the data packet to be pushed corresponding to the at least one web application through the browser; and present the acquired message to be pushed according to the push object information.

12. A server, **characterized in that**, the server comprises:
a processor; and
a memory for storing instructions executable by the processor;
wherein the processor is configured to: receive an application list sent by a web application center through a browser, at least one web application being included in the application list; acquire a message to be pushed corresponding to the at least one web application at which messages to be pushed are collected in advance, according to the application list; generate a data packet to be pushed corresponding to the at least one web application, the data packet to be pushed including at least the message to be pushed and push object information; and send the data packet to be pushed to the web application center, so that the web application center presents the message according to the data packet to be pushed.

13. A computer program, which when executing on a processor, performs the method according to any of claims 1 to 5.

14. A computer program product stored on a computer usable medium, comprising computer-readable program means for causing a terminal to implement the method according to any of claims 1 to 3.

15. A computer program product stored on a computer usable medium, comprising computer-readable program means for causing a server to implement the method according to claim 4 or 5.
